**Europäisches Patentamt**

**European Patent Office**

**Office européen des brevets**

(19)

(11)  **EP 1 528 379 A1**

(12)    **EUROPEAN PATENT APPLICATION**

(43) Date of publication:
**04.05.2005 Bulletin 2005/18**

(51) Int Cl.7: **G01J 3/44**, G01N 21/64

(21) Application number: **03024655.7**

(22) Date of filing: **27.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicants:<br>• **Evotec Technologies GmbH**<br>  **40225 Düsseldorf (DE)**<br>• **Evotec OAI AG**<br>  **22525 Hamburg (DE)**<br><br>(72) Inventors:<br>• **Eggeling, Christian**<br>  **97085 Göttingen (DE)** | • **Kask, Peet**<br>  **Harku vald Harjumaa (EE)**<br>• **Palo, Kaupo**<br>  **Viimsi vald Harjumaa (EE)**<br>• **Mets, Ülo**<br>  **Tallin 13515 (EE)**<br>• **Loorits, Vello**<br>  **Tallin 10616 (EE)**<br><br>(74) Representative:<br>**von Kirschbaum, Alexander, Dipl.-Ing. et al**<br>**Postfach 10 22 41**<br>**50462 Köln (DE)** |

(54)    **A method for resolving species of fluorescent molecules in a sample**

(57)    The present invention relates to the field of fluorescence analysis methods. It provides a method for resolving species of fluorescent molecules in a sample using a set of sample parameters $(\alpha, \beta, ...)$. Each parameter represents a physical property of a species. The method comprises the steps of :

• monitoring fluorescence signals emitted by fluorescent molecules in said sample,
• determining from said signals at least two different experimental statistical functions $\hat{F}_1(\mathbf{u})$, $\hat{F}_2(\mathbf{v})$,..., with arguments $\mathbf{u}$ and $\mathbf{v}$,
• globally fitting corresponding theoretical statistical functions $F_1(\mathbf{u})$, $F_2(\mathbf{v})$,... against said experimental statistical functions $\hat{F}_1(\mathbf{u})$, $\hat{F}_2(\mathbf{v})$,..., thereby estimating sample parameters of interest

According to the invention, at least two functions out of said experimental statistical functions $F_1(\mathbf{u})$, $F_2(\mathbf{v})$,... differ in at least one of their arguments.

(Fig. 8)

**Description**

The present invention relates to the field of fluorescence analysis methods. It provides a method for resolving species of fluorescence molecules in a sample with exceptional high statistical accuracy. The method can also be applied to detect artefacts in data obtained from fluorescence experiments.

In early 1990's, the sensitivity of fluorescence analysis had reached a single fluorophore molecule level (Eigen et al., PNAS, 91, 5740 - 5747, 1994). The high sensitivity of fluorescence detection has induced the development of a series of additional methods suited for monitoring biochemical reactions in vitro or in vivo.

In order to detect the degree of any reaction by fluorescence, the molecule of interest (unless it is autofluorescent) has to be fluorescently labelled - which is a well known procedure - and a change in any fluorescence parameter, e.g. intensity, colour, lifetime, polarization, due to the reaction is monitored. Starting from the observation of the total fluorescence signal one way of improving this methodology is to directly distinguish different species of fluorescent molecules, i.e. the different reactants. This was e.g. made possible by analyzing the fluorescence characteristics from a single molecule (single-molecule detection, SMD) (Eigen et al., PNAS, 91, 5740 - 5747, 1994; Keller et al., Appl. Spectrosc., 50, 12A - 32 A, 1996). Further improvement of this methodology of analysis was to increase the number of random variables, i.e. of different fluorescence parameters, that are monitored in parallel by the fluorescence detection equipment. In the first SMD experiments, fluorescence intensity (Hirschfeld, Appl. Opt., 15, 2965 - 2966, 1976; Orrit et al., Phys. Rev. Lett.., 65, 2716 - 2719, 1990) and later fluorescence lifetime (Soper et al., J. Opt. Soc. Am. B, 9, 1761 - 1769, 1992; Zander et al., Appl. Phys. B. 63, 517 - 523, 1996) were the only monitored random variables. Later, fluorescence from single molecules has been registered using two, or even four detectors monitoring different polarization and/or spectral components of fluorescence (Schaffer et al., J. Phys. Chem. A., 103, 331 - 336, 1999; Eggeling et al., J. Biotechnol., 86, 163 - 180, 2001; Rothwell et al., PNAS, 100, 1655 - 1660, 2003). Furthermore, if fluorescence is excited by laser pulses and the excitation-to-detection delay time is determined for each detected photon, it is possible to observe two independent (e.g. intensity and excitation-to-detection delay time) rather than a single random variable per each detector.

Seidel and his co-workers have demonstrated how different states of fluorescent molecules can be resolved, if the fluorescence is collected at very low concentrations of much less than a single molecule per measurement volume. Typically, very low concentrations were applied because in this case one can assume that no more than one molecule is monitored at a time. The molecular resolution was achieved by the determination of value pairs of different random variables or functions thereof for each single molecule event and by plotting the frequencies of these value pairs in a multi-dimensional histogram (Eggeling et al., J. Biotechnol., 86, 163 - 180, 2001; Ambrose et al., Ber. Bunsenges. Phys. Chem., 97, 1535 - 1542, 1993; Rothwell et al., PNAS, 100, 1655 - 1660, 2003). The events in histograms were grouped into clusters each corresponding to a species. In other words, different species contributed to different clusters of single-molecule events in the histogram. The number of events in each cluster is a measure of the concentration.

The approach described above has its limitations. At such low concentration, as demanded by the approach, most of the data acquisition time is spent on waiting for new molecules to enter the measurement volume. This makes this type of analysis not applicable to experiments where data acquisition time is critical, in particular high throughput applications such as drug screening.

Another approach for resolving different fluorescent species is based on an analysis procedure which fits a given statistical function of random variables. A possible statistical function can e.g. be deduced by analyzing the fluctuation of the detected fluorescence signal induced by only a few fluorescing molecules. Examples of this kind are the correlation function or frequency histogram of amplitudes (count number distribution) of the fluctuations as realized in fluorescence correlation spectroscopy (FCS) (Magde et al., Phys. Rev. Lett., 29, 705 - 708, 1972) and fluorescence intensity-distribution analysis (FIDA) (Kask et al., PNAS U.S.A., 96, 13756 - 13761, 1999), respectively. Once again improvement was gained by analyzing functions of several random fluorescence variables, as realized in the two-detector versions of FCS (fluorescence cross-correlation spectroscopy (FCCS) (Kask et al., Eur. Biophys. J., 14, 257 - 261, 1987; Schwille et al., Biophys. J., 72:1878 -1886, 1997) and FIDA (two-dimensional fluorescence intensity distribution analysis (2D-FIDA), (Kask et al., Biophys. J., 78, 1703 - 1713, 2000), and further developments called fluorescence intensity multiple distribution analysis (FIMDA) (Palo et al., Biophys. J., 79, 2000) and fluorescence intensity and lifetime distribution analysis (FILDA) (Palo et al., Biophys. J., 83, 605 - 618, 2002). It is however not necessary that a method makes use of the signal fluctuations. For example, fluorescence lifetime analysis (FLA) or time resolved fluorescence anisotropy (TRFA) (Lakowicz, Principles of Fluorescence Spectroscopy, Plenum Press, 1999) extract the molecular resolution by building up and fitting the frequency histogram of the fluorescence-to-detection delay times of either only one detector (FLA) or of two detectors monitoring different polarization components of fluorescence (TRFA). The methods of the whole second approach which are based on fitting, are characterised by the existence of a solid theory for calculating the corresponding expected function. Parameters of the model are determined by fitting the theoretical function against the measured one.

The advantages as well as limitations of this second approach differ from those of the first SMD approach.

Methods based on fitting can typically be applied at higher concentrations. Thus, data acquisition time can be sufficiently decreased for high throughput applications (Eggeling et al., http://w210.ub.uni-tuebingen.de/portal/BioSensor 2001). However, the statistical function subject of fitting is typically a function of one or a few arguments; a high number of arguments does increase the fitting time.

Furthermore, in contrast to the first SMD approach - where fluorescence data from single-molecule events are directly plotted without an intermediate data processing step - in the case of the second approach misinterpretations may easily occur. It may happen that a statistical function of a single or two arguments can be fitted with a satisfactory closeness on the basis of a wrong model. Therefore, wrong conclusions may be drawn. For example, in high throughput drug screening, false decisions occur at the frequency of about one percent of all samples, because fitting is performed on the basis of a model that is correct only in 95 to 99 percent of all samples, but wrong (typically too simple) in the other 1 to 5 percent cases, e.g. when the screened drug candidate is itself fluorescent (Eggeling et al., DDT, 8, 632 - 641, 2003).

It is an object of the present invention to overcome the limitations of the prior art methods described above and to provide a method of high statistical accuracy.

This object is solved by the method according to claim 1. Preferred embodiments of the method according to the present invention are the subject of the dependent claims.

The present invention provides a method for resolving species of fluorescent molecules in a sample using a set of sample parameters $(\alpha, \beta, ...)$. Each such parameter represents a physical property of a species. In a first step, fluorescent signals emitted by fluorescent molecules in a sample are monitored. From these signals, at least two different experimental statistical functions $\hat{F}_1$ (**u**), $\hat{F}_2$ (**v**), ... with arguments **u**, **v**, ... are obtained. Then, corresponding theoretical statistical functions $F_1$ (**u**), $F_2$ (**v**), ... are globally fitted against said experimental statistical functions $\hat{F}$ (**u**), $\hat{F}_2$ (**v**),..., thereby estimating sample parameters of interest. Preferably, at least two functions out of said experimental statistical functions $\hat{F}_1$ (**u**), $\hat{F}_2$ (**v**) ,... differ in at least one of their arguments.

A main idea of the present invention is to reduce the frequency of misinterpretation of the measured data (i. e. artifacts or false decisions) by applying a global fitting strategy. The statistical functions - that are usually solely subject of fitting by the different methods described above - are altogether fitted globally according to the present invention. Typically, the different functions used for global fitting vary in the selection of random variables for their calculation and coincide only in a few of them.

The approach for global fitting presented here is a rather unusual. Global fitting is a widely used strategy. However, typically a series of qualitatively similar data are connected for global fitting, which differ e.g. by some conditions of sample preparation rather than by the selection of random variables for the calculation of a statistical function. Another unusual feature of this invention is that the theories of the different methods that are combined applying a global fit strategy typically are inspected and, if necessary, modified in order to grant their consistency.

Each said theoretical statistical function $F_1$ (**u**), $F_2$ (**v**), ... depends in a preferred embodiment on said set of sample parameters $(\alpha, \beta,...)$. However, each function may alternatively depend merely on a subset thereof. In the latter case, at least two functions out of said theoretical statistical functions $F_1$ (**u**), $F_2$ (**v**),... depend on at least one shared sample parameter other than concentration.

It is preferred that at least one of said experimental statistical functions $\hat{F}_1$ (**u**), $\hat{F}_2$ (**v**), ... is sensitive to intensity fluctuations of the monitored fluorescence. Typical statistical functions of this type are the following: fluorescence intensity autocorrelation functions (as used in FCS), histograms of a photon count number (as used in FIDA), histograms of photon count numbers detected by two detectors (as used in 2D-FIDA), histograms of a photon count number and an integrated excitation-to-detection delay time (as used in FILDA).

Generally speaking, at least one of said statistical function is preferably a histogram or distribution function of one or more random variables. It might be preferred to use in addition a correlation function.

In a preferred embodiment, at least one of said arguments of the statistical function is a photon count number per time interval. Further preferred arguments of the statistical function comprise the following: time interval between photon counts, excitation-to-detection delay time interval, an integer bin number measuring excitation-to-detection delay time interval, a sum of integer bin numbers measuring excitation-to-detection delay time interval over photons detected in a single counting time interval, delay time between two counting time intervals and width of counting time intervals. As outlined above, at least two functions out of said experimental statistical functions $\hat{F}_1$ (**u**), $\hat{F}_2$ (**v**),... may differ in at least one of their arguments. Said arguments in which the two statistical functions differ preferably belong to the different classes of arguments listed in this paragraph.

Typical sample parameters which may be determined by the method according to the present invention comprise the following: concentration (e.g. expressed as the mean number of molecules per a specified measurement volume), a measure of molecular brightness (e.g. count rate per molecule of given species), a measure of fluorescence lifetime, diffusion coefficient or its equivalent, rotational relaxation time or its equivalent, and a function of signal detected on different detectors measuring different fluorescence polarization components or different fluorescence emission bands. It is preferred to determine several of these parameters by the method of the present invention.

The fluorescence signals might be monitored utilizing optical equipments known in the art, such as microscopes, preferably of a confocal type, or plate readers. Fluorescence emission of the molecules in the sample under study might be stimulated by lasers, e.g. through repetitive laser pulses. In a preferred embodiment, detection is performed using several photon detectors monitoring different polarization components of the fluorescence emission and/or different spectral components thereof.

When calculating different theoretical statistical functions, it is preferred to use a single consistent theoretical model. Such model can preferably be developed involving the following steps. First, assumptions that are used by fluorescence methods based on fitting the statistical functions separately are inspected. Contradictions in the assumptions should be resolved. For example, FCS traditionally assumes an ellipsoidal Gaussian brightness profile while this profile is not well suited for FIDA approaches. When combining FCS with FIDA, the FIDA profile (with its specified volume-brightness relationship but undefined spatial shape) is assigned an ellipsoidal shape with an axial ratio as required by FCS. Secondly, the sets of model parameters that are used by the fluorescence methods separately should be carefully inspected when combining these methods. It might occur that a set of independent parameters are selected which model parameters of the separate methods depend on. For example, two count rates per molecule (corresponding to the two detectors involved) are specific parameters characterizing each species in 2D-FIDA. However, when combining 2D-FIDA with TRFA, one should not consider them as independent parameters since their ratio is a function of model parameters of TRFA.

In particular, when a new set of statistical functions is introduced, it is helpful to conduct first experiments on a single fluorescent species. The theoretical model can then be tested against inconsistency in calculating the theoretical statistical functions. In such preparatory experiments using single fluorescent species, equipment parameters can be determined which can be considered in the calculation of the theoretical statistical functions.

An application of a special interest to the method according to the present invention is high throughput drug screening. In drug screening, there is a demand to decide from a relatively short measurement (typically of about 1 s duration) the ratio of concentration of different (e.g. "bound" and "free") states of the labeled molecule in a particular sample containing a particular potential drug candidate (compound).

One way to reduce statistical errors is to measure as many parameters as possible beforehand from control samples, e.g. containing only bound or unbound species. Fluorescence lifetimes, molecular diffusion times and molecular brightness of the bound and free states are of that kind. These values are subsequently fixed when screening hundreds of thousand of samples and fitting the according data. The more random parameters can be fixed, the more accurate will be the determination of the concentration. Combined methods feature a maximum number of possible parameters to be determined beforehand and to be fixed.

Furthermore, when fitting screening data it is assumed that the drug candidate is non-fluorescent and that it does only interact with the disease target and not with the fluorophore of the competitive ligand directly, e.g. by quenching the ligand's fluorescence and changing the fluorescence characteristics of e.g. bound or unbound species. The assumptions are more or less correct in 99 percent of samples. In these cases, different fluorescent methods yield about the same result on the extent of binding. They will differ in their standard error of the estimated binding degree due to variations in the statistical accuracy between the different methods. However, there are cases when the assumptions of analysis are incorrect, e.g. when a particular drug candidate is auto-fluorescent or a quencher. In these cases the results will be wrong independently of the applied method, since the assumed fitting model (no additional fluorescent species besides e.g. bound and unbound or no change in the fluorescence characteristics of e.g. bound or unbound) is wrong (Eggeling et al., DDT, 8, 632 - 641, 2003). The way to circumvent this problem is to add an additional species in the fit without knowing anything about its values beforehand and/or to not fix pre-determined parameter values. This will introduce more freedoms to the fit and thus will decrease the statistical accuracy of the outcome. A combination of different methods applying global fitting according to the present invention can help here. A characteristic property of the method according to the present invention is its ability to estimate unknown parameters with a much higher accuracy than each of the prior art methods individually. This is *inter alia* shown in the example in Table 4 below. Specific molecular parameters have not been fixed in this example and the statistical accuracy of the resulting parameter values is significantly increased using the method according to the present invention. Thus, with a combination of different methods applying global fitting for their corresponding statistical functions, there is no need to fix as many parameters as typical for traditional drug screening methods. Thus, even those parameters can be fitted that deviate from the predetermined assumptions in 1 percent of all cases. Overall, the method according to the present invention is a powerful tool for reducing false decisions, especially in high throughput drug screening.

The following figures illustrate results obtained by applying the method according to the present invention (partly in comparison to the prior art) in more detail.

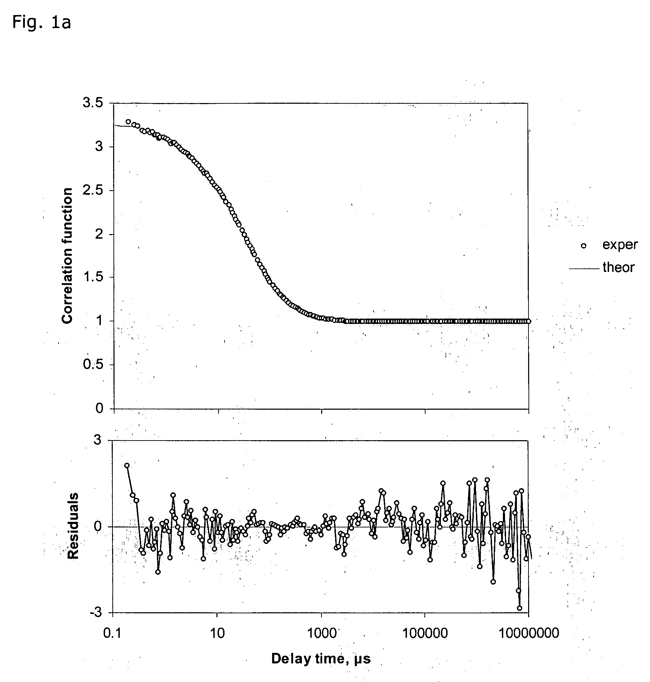

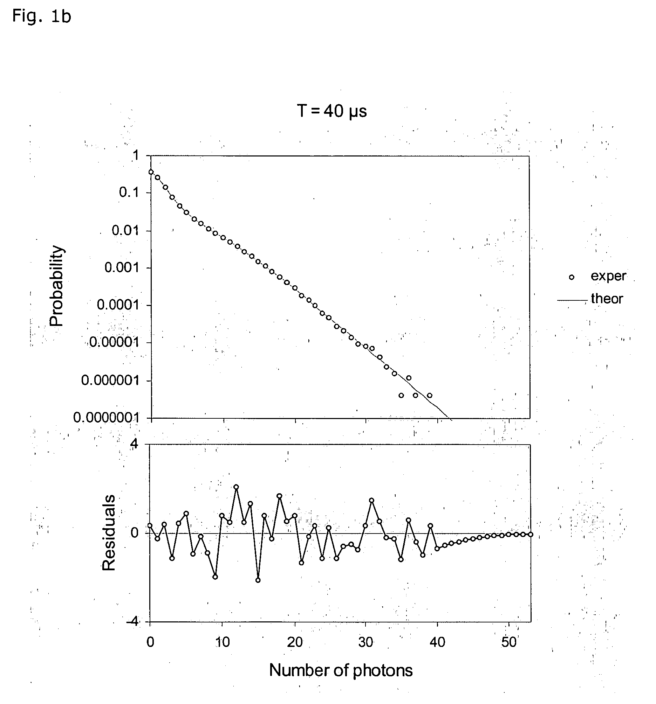

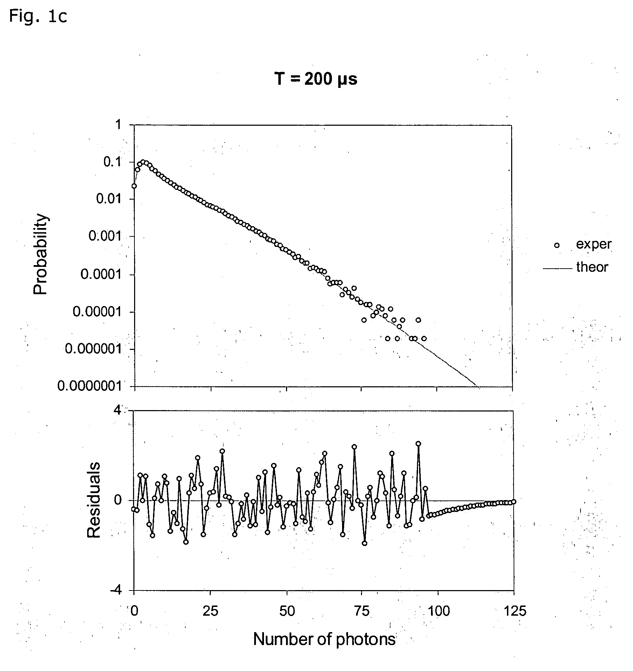

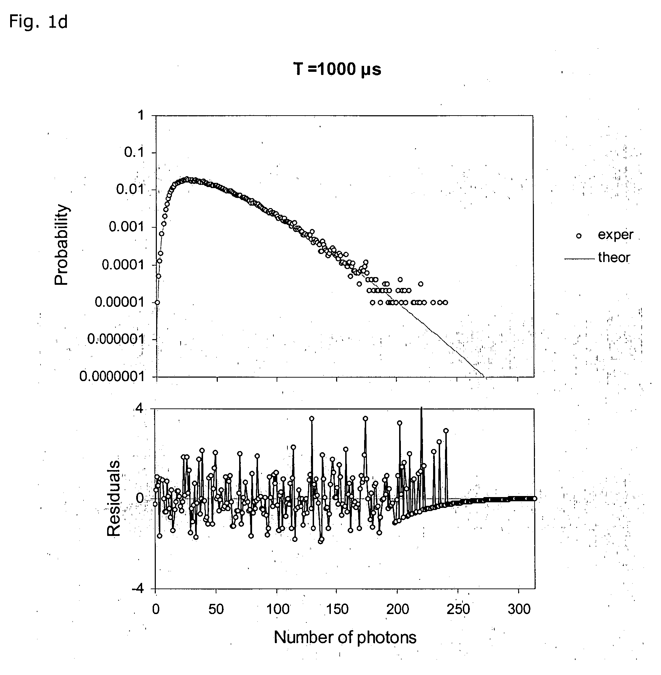

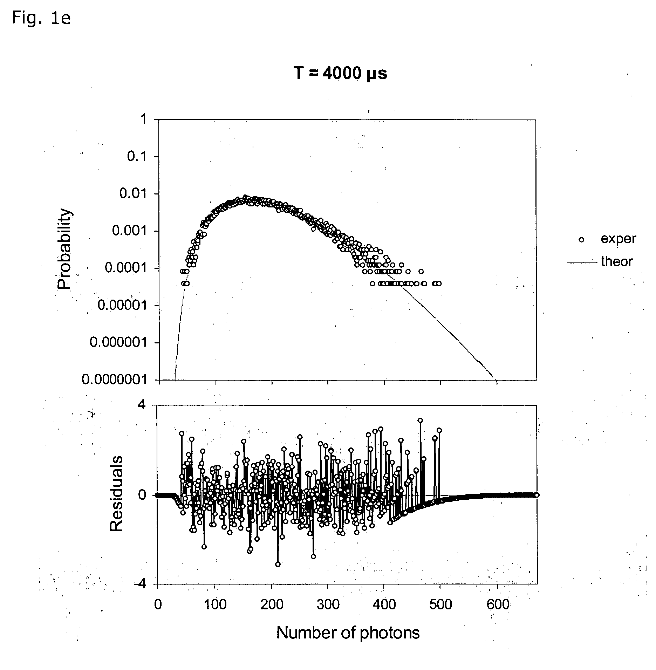

**Fig. 1** depicts the results of a typical FCS + FIMDA experiment of 100 s duration on TAMRA: experimental functions (upper graphs, open dots), theoretical best fit functions (upper graphs, solid line) and weighted residuals (lower graphs): an auto-correlation function of fluorescence intensity (a); photon count number distributions at time windows of $T$ = 40 µs (b), $T$ = 200 µs (c), $T$ = 1000 µs (d) and $T$ = 4000 µs (e).

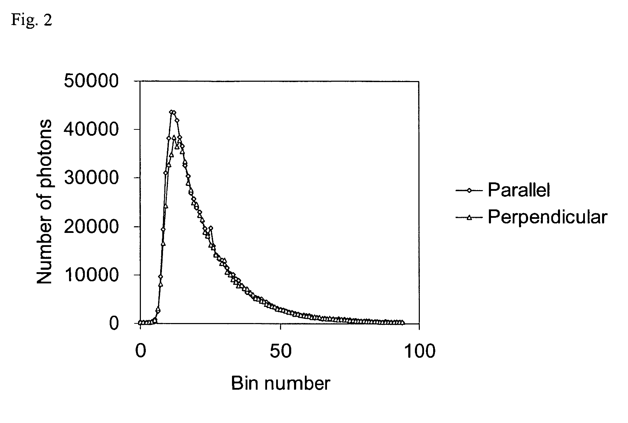

**Fig. 2** depicts a typical outcome of a time-resolved fluorescence anisotropy (TRFA) experiment (prior art). The bin number is a measure for the excitation-to-detection delay time. The two bin number histograms have been fitted simultaneously. TRFA in principle allows to estimate the following sample parameters: count rate, fluorescence lifetime parameter(s) and rotational relaxation parameters.

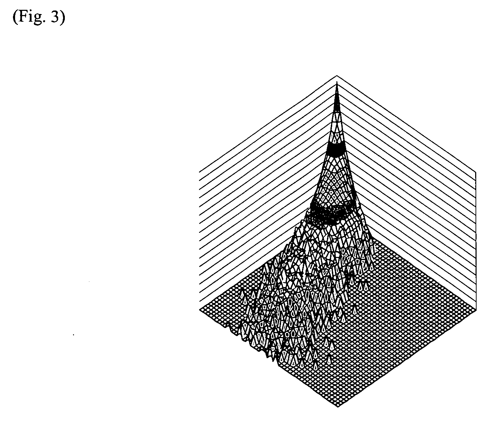

**Fig. 3** depicts a 3D-plot of a two dimensional fluorescence intensity distribution analysis (2D-FIDA) histogram (prior art). X- and y-axis represent two random variables, photon count numbers by the detectors monitoring the "parallel" (left) and the "perpendicular" (right) polarization components of fluorescence. The z-axis represents (in the logarithmic scale) the number of events with a particular pair of the two photon count numbers.

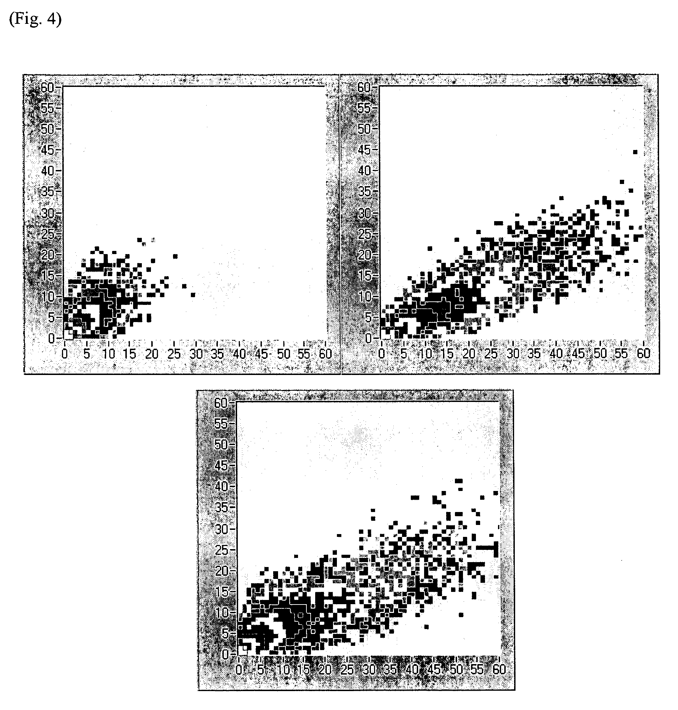

**Fig. 4** depicts 2D-FIDA histograms (prior art) for a first species (upper left histogram), a second species (upper right histogram) and their mixture (lower histogram). 2D-FIDA allows to resolve species and estimate the following sample parameters: number of molecules of a given species, count rate per molecule and specific anisotropy. On these graphs, the number of events is represented by a color code. The x-axis represents the photon count number of parallel polarization, while the y-axis represents such number of perpendicular polarization.

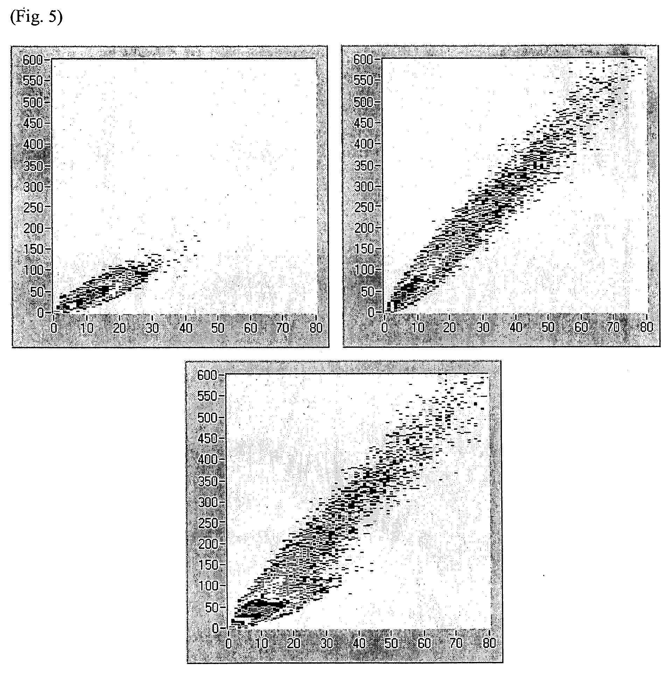

**Fig. 5** depicts a typical outcome of a prior art fluorescence intensity and lifetime distribution analysis (FILDA) for a first species (upper left graph), a second species (upper right graph) and their mixture (lower graph). The x-axis represents the number of photon counts while the y-axis represents the sum of bin numbers each measuring an excitation-to-detection delay time. FILDA allows to resolve species and estimate the following sample parameters: number of molecules of a given species, count rate per molecule and fluorescence lifetime.

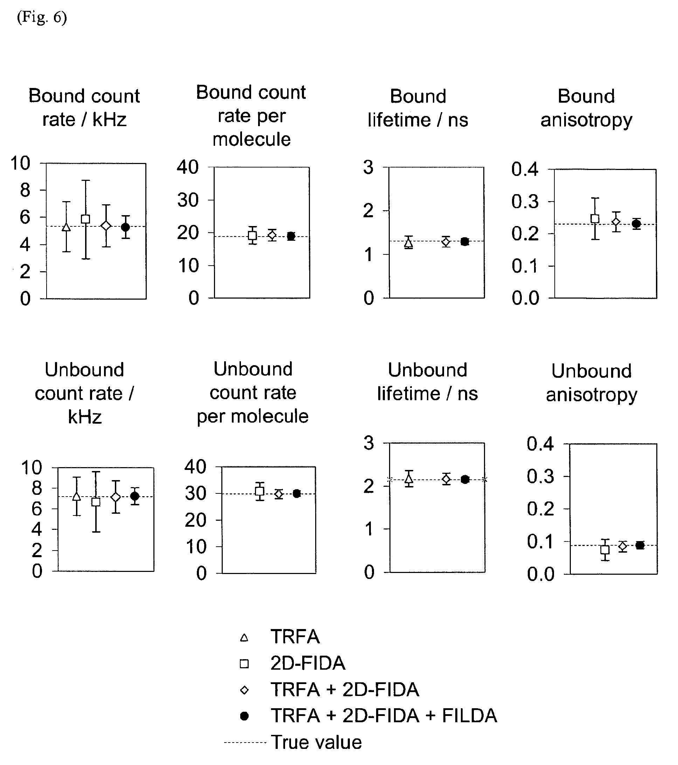

**Fig. 6** compares the results of the prior art methods TRFA and 2D-FIDA applied separately with their combination (TRFA + 2D-FIDA) according to the present invention. In addition, a combination of three methods (TRFA + 2D-FIDA + FILDA) has been applied according to the present invention, i.e. the statistical functions underlying these methods have been globally fitted to derive the following sample parameters: count rate from species, count rate per molecule, lifetime and anisotropy. Applying the present invention significantly reduces errors bars, i.e. leads to an improved statistical accuracy of analysis.

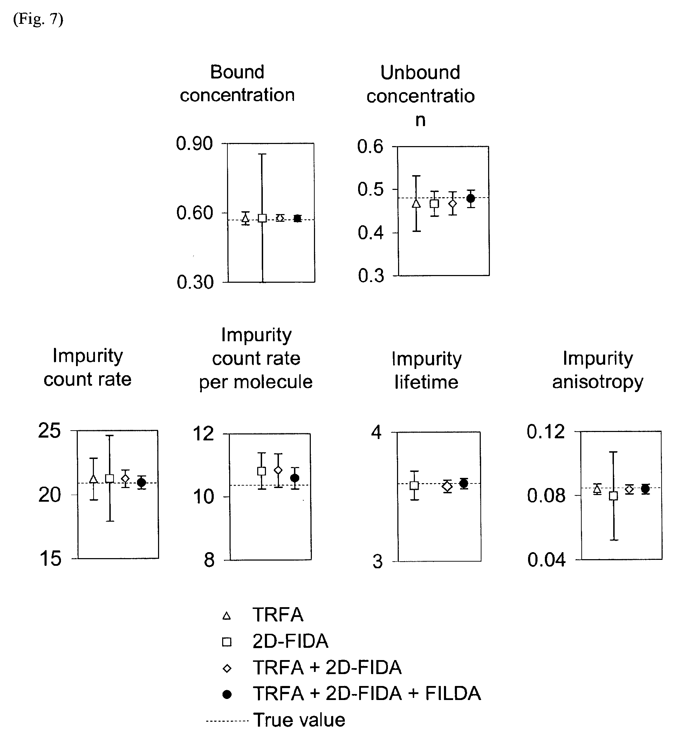

**Fig. 7** compares the results of the prior art methods TRFA and 2D-FIDA applied separately with their combination (TRFA + 2D-FIDA) according to the present invention. In addition, a combination of three methods (TRFA + 2D-FIDA + FILDA) has been applied according to the present invention. As already shown in Fig. 6, an improved statistical accuracy has been gained in this test experiment by applying the method of the present invention.

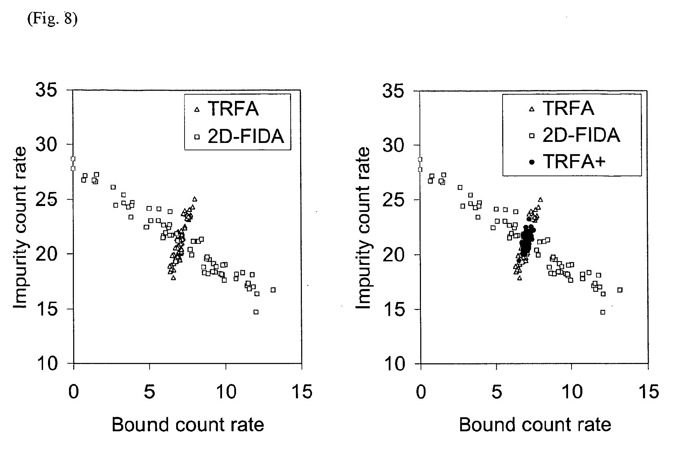

**Fig. 8a** (left graph of figure 8) shows the results of the prior art methods TRFA and 2D-FIDA graphed in the sample parameter space (impurity count rate vs. bound count rate). For these different methods, results in the sample parameter space are scattered in different directions.

**Fig. 8b** (right graph of figure 8) shows the results of the prior art methods TRFA and 2D-FIDA compared to the results of their combination TRFA+ according to the present invention, all graphed in the sample parameter space (impurity count rate vs. bound count rate). In the global fit analysis according to the present invention, statistical errors are significantly reduced.

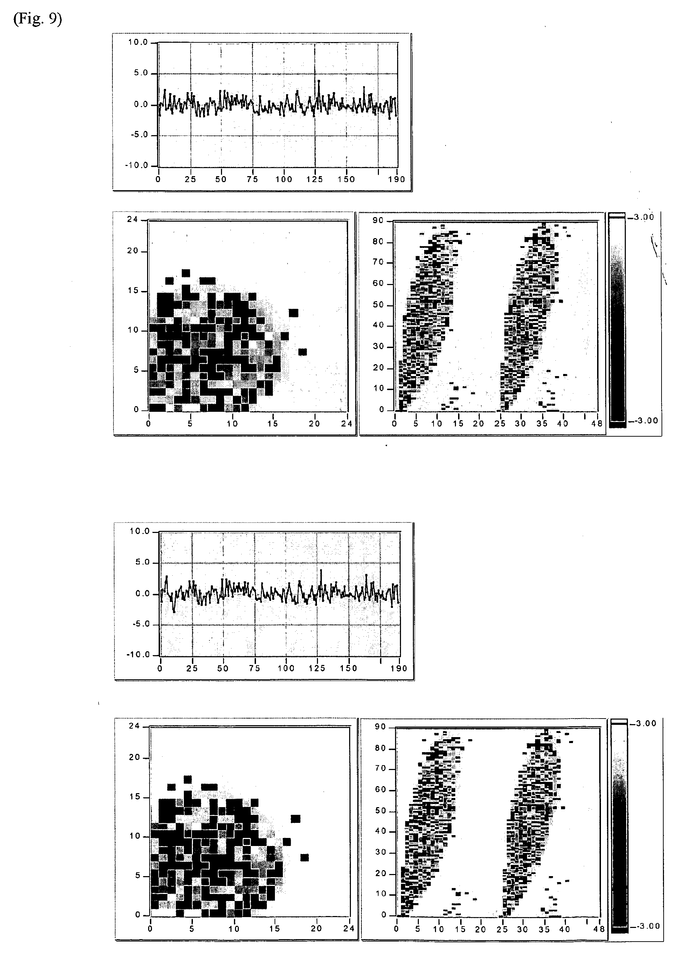

**Fig. 9** shows the results of an experiment (data acquisition time: 30 s) conducted on the fluorescent dye MR-121. The residuals of fitting applying a separate fit procedure according to the prior art (upper three graphs) and a global fit procedure according to the present invention (lower three graphs) are randomly distributed in both cases, thereby proving that the method of the present invention is well applicable. Each of the three graphs represents the residuals for the following methods in the order of their appearance: TRFA (x-axis: excitation-to-detection delay time, y-axis: weighted residuals), 2D-FIDA (x-axis: photon count number of the "parallel" detector, y-axis: photon count number of the "perpendicular" detector) and FILDA (x-axis: photon count number, y-axis: sum of excitation-to-detection delay times).

The following examples are intended for purposes of illustration only and should not be construed to limit the scope of the invention, as defined in the claims appended hereto.

### *EXAMPLE 1: A Combination of FIMDA and FCS*

In fluorescence correlation spectroscopy FCS (Magde et al., Phys. Rev. Lett., 29, 705 - 708, 1972), the correlation function of the fluorescence signal fluctuation is calculated and fitted to distinguish and quantify different fluorescing species by their diffusion time (e.g. a binding reaction can be followed by an increase in this diffusion time due to the mass increase). Fluorescence intensity multiple distribution analysis FIMDA (Palo et al., Biophys. J., 79, 2000) analyzes a set of frequency histograms of the amplitudes of the fluorescence signal fluctuation (count number distribution) obtained in different time windows to distinguish and quantify different fluorescing species by their diffusion time and fluorescence brightness. FIMDA alone has theoretically been considered to be a more powerful replacement to FCS, since it combines the two random variables, diffusion time and fluorescence brightness. However, its realization in applications such as high-throughput analysis, where it could indeed replace FCS, is hampered. FCS curves usually use more than 100 data points to cover a wide dynamic range in time from typically 50 ns to 1 s scale. It is not realistic to use the same number of count number histograms in FIMDA, however. (a) A too high number of simultaneous analyzed photon count distributions increases the evaluation time. (b) The recent developed theory version of FIMDA (Palo et al., Biophys. J., 79, 2000) is not well suited for the calculation of the expected count number distributions at time windows $T < 20$ μs comparable to the triplet lifetime of usual fluorophores. (c) Counting time intervals above 10 ms in FIMDA are not very practicable because their fitting would require too much calculation time for too little useful information they carry.

According to the present invention, the count number distributions / histograms of FIMDA are globally fitted together with an autocorrelation function of FCS. For the combination of both methods it was considered reasonable to fit an FCS curve together with a few FIMDA histograms collected at moderate time windows. The combined method FIMDA and FCS according to the present invention has been realized in the following steps.

- Development of a consistent theory covering both FIMDA and FCS.
- Test experiments using a single species, demonstrating a good theoretical description of the experimental data.
- Test experiments using multiple species, demonstrating the power of the present invention
- to resolve species.

### Theory of the combination of FIMDA and FCS

The theory of FCS has been developed over decades since its introduction in 1972 (Magde et al., Phys. Rev. Lett., 29, 705 - 708, 1972). A usual assumption of FCS is that different molecules and molecular species move and emit fluorescence independently of each other. Under this assumption, the normalized auto-correlation function of fluorescence intensity defined as

$$G(t) = \frac{\langle I(t_r)I(t + t_r)\rangle}{\langle I(t_r)\rangle^2}$$

($I(t)$ denotes intensity as a function of time; <...> denotes averaging over time $t_r$) can be expressed (Rigler & Elson (eds.), Fluorescence Correlation Spectroscopy - Theory and Application, Chemical Physics, Springer, 2001) as

$$G(t) = 1 + \frac{\sum_i c_i q_i^2 g_i(t)}{\left(\lambda + \sum_i c_i q_i\right)^2}$$

$c_i$ is the concentration (mean number of molecules of the i-th species in the defined measurement volume),
$q_i$ is the mean count rate per molecule of the $i$-th species (molecular brightness),
$\lambda$ is the count rate of uncorrelated background signal, and
$g_i(t)$ is the time dependent shape function of the component in the auto-correlation function corresponding to the $i$-th species.

In case the processes responsible for fluorescence intensity fluctuations are limited to singlet-triplet transitions and translational diffusion, and the distribution of the fluorescence emission in the measurement volume (spatial brightness function) is ellipsoidal Gaussian, $g_i(t)$ can be expressed as (Rigler & Elson (eds.), Fluorescence Correlation Spectroscopy - Theory and Application, Chemical Physics, Springer, 2001).:

$$g_i(t) = \frac{1 + \frac{p_i^{(T)}}{1 - p_i^{(T)}} \exp\left(-\frac{|t|}{\tau_i^{(T)}}\right)}{\left(1 + \frac{|t|}{\tau_i^{(D)}}\right)\sqrt{1 + \frac{|t|}{\beta^2 \tau_i^{(D)}}}}$$

$p_i^{(T)}$   denotes a mean population of the triplet state,

$\tau_i^{(T)}$   the triplet-singlet relaxation time, and

$\tau_i^{(D)}$   the diffusion time in the radial direction of each species i, and

β   the longitudinal to radial Gaussian radius ratio of the spatial brightness function (in short: the axial ratio). The formula above assumes no dead time of the detector.

Compared to FCS, the theory of FIMDA is quite young (Palo et al., Biophys. J., 79, 2000). The fundamental formula relates the second factorial cumulant $K_2(T) = \langle n(n-1) \rangle_T - \langle n \rangle_T^2$ of a count number distribution $P(n;T)$ (n is the number of photons detected within a time window T and P(n, T) is its frequency or distribution throughout an experiment) with the above mentioned auto-correlation function of the corresponding counting function $G_2(t) = \langle I(t_r)I(t + t_r) \rangle - \langle I(t_r) \rangle^2$.

$$K_2(T) = \int_0^T dt_1 \int_0^T dt_2\, G_2(t_2 - t_1)$$

When applying this formula to the photon detection function from a single species, one can calculate from parameters of the FCS model the concentration c and the count rate per molecule (brightness) q , and the corresponding parameters of the theoretical model for a count number distribution (see FIDA theory, Kask et al., PNAS U.S.A., 96, 13756 - 13761, 1999) which are the apparent count rate per molecule (brightness) $q_{app} = \dfrac{K_2}{K_1 T}$ and the apparent concentration $c_{app} = \dfrac{K_1^2}{K_2}$, depending on the width of the time window $T$.

$$q_{app}(T) = \frac{\displaystyle\int_0^T dt_1 \int_0^T dt_2\, G_2(t_2 - t_1)}{cqT^2},$$

$$c_{app}(T) = \frac{cq}{q_{app}(T)}$$

In the theory presented in the first publication on FIMDA (Palo et al., Biophys. J., 79, 2000), it was assumed that the shape parameters of the apparent spatial brightness function of the fluorescence detection volume are independent of the width of the time window $T$. An empirical formula used in the FIDA theory (Kask et al., PNAS U.S.A., 96, 13756 - 13761, 1999) expresses the size of volume elements dV(**r**) at position **r** of the emission volume by the logarithm of the according relative spatial brightness function B(**r**), $u(\mathbf{r}) = \dfrac{\ln[B(0)]}{\ln B(\mathbf{r})}$.

$$dV(u) = A_0\left(u + a_1 u^2 + a_2 u^3\right)$$

$\alpha_1$ and $\alpha_2$ are parameters determined from experiments, while $A_0$ is a normalization factor determined conventionally by $\int B\,dV = \int B^2\,dV = 1$.

Later (Palo et al., Biophys. J., 83, 605 - 618, 2002), the empirical relationship has been modified to include an additional parameter $\alpha_3$.

$$dV(u) = A_0\left(1 + a_1 u + a_2 u^2\right)u^{a_3}$$

The version of the theory of FIMDA used for the combination with FCS in accordance with the present invention is further developed as described in the following. It is not any more assumed that parameters of the apparent spatial brightness function B(**r**) are independent of the counting time window T. Rather, for each species i and each time window T, the parameters of the spatial brightness function ($a_j$, j = 1,2,3) are corrected in the following linear approximation:

$$\alpha_j = \alpha_j^{(0)} + b_j f(T, \tau_i^{(d)}, \beta)$$

$\alpha_j^{(0)}$ and $b_j$ are parameters of equipment determined from adjustment experiments, while $f(T, \tau_i^{(d)}, \beta)$ is a function of the time window T and diffusion time $\tau_i^{(d)}$. From empirical tests, the above given linear relationship is a satisfactory approximation when $f(T, \tau_i^{(d)}, \beta)$ is the following function resembling a correlation function accounting diffusion:

$$f(T, \tau, \beta) = 1 - \frac{1}{\left(1 + \dfrac{T}{\tau}\right)\sqrt{1 + \dfrac{T}{\beta^2 \tau}}}$$

Thus, there are seven parameters of the spatial brightness function in the present theory version, $\beta$, $\alpha_j^{0)}$ and $b_j$ (j = 1,2,3), whose values can be determined from adjustment experiments. It might be possible that future developments of the FIMDA theory might have a lower number of adjustment parameters yielding the same fit quality. However, presently this version is satisfactory, since it grants a very good fit between the theory and experimental data in a wide range of time windows above $T$ = 20 µs.

The final theoretical description of a count number distribution for FIMDA is expressed via the generating function principle. The generating function of a count number distribution is expressed as follows (Kask et al, PNAS U.S.A., 96, 13756 -13761, 1999):

$$G(\xi) = \exp\left((\xi - 1)\lambda T + \sum_j c_j \int_V \left\{\exp\left[(\xi - 1)q_j TB(\mathbf{r})\right] - 1\right\} dV\right)$$

The theoretical count number distribution is calculated as a Fourier transform of the generating function:

$$P(n) = \frac{1}{2\pi} \oint G(\phi) e^{-in\phi} d\phi$$

Here $\xi$ is substituted by $\exp(i\phi)$, i.e. effectively restricted to a complex unit circle.

The theory of the combined method FIMDA and FCS according to the present invention is a straightforward combination of the theories presented above. Further modification is not necessary since the above described version of the FIMDA theory has been developed directly on the basis of the FCS theory. In the context of the combined method according to the present invention, parameters of the theoretical model are divided into global and local ones. Global parameters are concentrations (typically mean particle numbers per measurement volume), specific count rates per molecule, the background count rate, and the axial ratio of the spatial brightness function. (If it is necessary to correct data for the dead time of the detector then there is an additional global parameter, the dead time of the detector. However, in this study, zero dead time has been assumed.) Triplet parameters are global parameters of the theory but *de facto* estimated solely on basis of FCS data. (Whenever FIMDA was used alone, it was assumed that the triplet term is absent (Palo et al., Biophys. J., 79, 2000)). The six empirical parameters of the spatial brightness function ($a_j$, $b_j$, j = 1,2,3) are solely characteristic for FIMDA but not for FCS (i.e. they are local parameters within FIMDA).

### *Experimental set-up and data acquisition*

A standard confocal fluorescence microscope designed for FIDA, FCS and related methods has been used for monitoring fluorescence intensity fluctuations emitted from a measurement volume (Kask et al., PNAS U.S.A., 96, 13756 - 13761, 1999). Primary data are stored in terms of consecutive photon-to-photon time intervals with a resolution of 50 ns. From the primary data, an auto-correlation function and a series of photon count number histograms at selected values of the counting time intervals, typically at 40, 200, 1000 and 4000 µs, are calculated. In order to determine statistical errors of fit parameters, each experiment was repeated ten times. Data acquisition time of each measurement was 100 s. In all cases of fitting presented here, the background count rate was fixed to the value of $\lambda$ = 272 Hz, determined independently from measurements on pure solvent.

***Test experiments***

An important task of test experiments is to verify that the statistical functions underlying FCS and FIMDA data can indeed be fitted globally, i.e. that a single value of each global parameter is suited to fit FIMDA and FCS data at a time. The success is shown in Figure 1.

An autocorrelation function (FCS) and four histograms (FIMDA) have been fitted with the same set of global parameters and are well described by theory, which becomes evident by the weighted residuals that are randomly scattered around zero.

Another way to demonstrate that the statistical functions underlying FCS and FIMDA data can be fitted globally is to compare the values of the global fit parameters obtained by FCS and FIMDA separately (prior art) and by their combination (present invention). Table 1 lists the results obtained from a series of experiments on a single species. Some estimates differ slightly, but the bias is very small. In particular, the results from FIMDA alone are slightly biased compared to the two other methods since the triplet transition is neglected in pure FIMDA theory.

| Parameter | FCS | FIMDA | FIMDA + FCS |
|---|---|---|---|
| $a_1^{(0)}$ | NA | $-0.419 \pm 0.004$ | $-0.419 \pm 0.004$ |
| $a_2^{(0)}$ | NA | $0.0520 \pm 0.0011$ | $0.0522 \pm 0.0012$ |
| $a_3^{(0)}$ | NA | $2.21 \pm 0.04$ | $2.20 \pm 0.04$ |
| $b_1$ | NA | $0.201 \pm 0.007$ | $0.196 \pm 0.007$ |
| $b_2$ | NA | $-0.091 \pm 0.003$ | $-0.088 \pm 0.003$ |
| $b_3$ | NA | $1.35 \pm 0.04$ | $1.29 \pm 0.04$ |
| $\beta$ | $5.3 \pm 0.4$ | $5.7 \pm 0.6$ | $5.3 \pm 0.4$ |
| $c$ | $0.484 \pm 0.010$ | $0.471 \pm 0.009$ | $0.484 \pm 0.010$ |
| $q$ | $92.7 \pm 0.6$ | $95.2 \pm 0.6$ | $92.8 \pm 0.6$ |
| $\tau^{(D)}$, µs | $33.0 \pm 0.4$ | $31.3 \pm 0.4$ | $33.0 \pm 0.4$ |
| $\tau^{(T)}$, µs | $1.93 \pm 0.09$ | NA | $1.90 \pm 0.09$ |
| $a^{(T)}$ | $0.127 \pm 0.002$ | NA (assumed 0.0) | $0.127 \pm 0.002$ |

**Table 1.** Results of fitting of FCS and FIMDA data separately (prior art) and in combination according to the present invention (obtained from measurements over 100 s on 1 nM aqueous Tetramethylrhodamin solution). In pure FIMDA fitting, the amplitude of the triplet term $a^{(T)}$ was fixed to zero. Time windows of FIMDA histograms were 40, 200, 1000 and 4000 µs.

Further, experiments have been performed applying different samples with varying fluorophores, concentration and brightness, in order to verify that the parameters describing the equipment (i.e., in this case the confocal microscope used to monitor the fluorescence signals) do not significantly depend on the sample. In Table 2, results of experiments on aqueous solutions of two different dyes, tetramethylrhodamine (TAMRA) and rhodamine red x (RRX) are presented. Indeed, values of parameters of the spatial brightness function of the microscope (first seven rows, Table 2) do not significantly depend on the sample, while parameters of the sample (last five rows, Table 2) differ significantly as expected from two different fluorophores.

As the next testing step, aqueous solutions of a mixture of the two dyes were studied. In the analysis of these measurements, parameters of the microscope equipment were fixed to the values determined from measurements on single species (Table 2). Mean values of the estimated parameters together with their standard errors are presented in Table 3. It is worth noticing that the two species were resolved without using any prior knowledge about values of their specific parameters. Besides the count rates per molecule (brightness), even the diffusion times of both species were reasonably estimated from a single measurement of the mixture. Values of estimated parameters are in a reasonable agreement with those measured on single species solutions separately (compare values of $q$ and $\tau^{(D)}$ in Tables 2 and 3).

| Parameter | TAMRA | RRX |
|---|---|---|
| $a_1^{(0)}$ | $-0.419 \pm 0.004$ | $-0.424 \pm 0.006$ |
| $a_2^{(0)}$ | $0.0522 \pm 0.0012$ | $0.0530 \pm 0.0016$ |
| $a_3^{(0)}$ | $2.20 \pm 0.04$ | $2.18 \pm 0.07$ |
| $b_1$ | $0.196 \pm 0.007$ | $0.197 \pm 0.018$ |
| $b_2$ | $-0.088 \pm 0.003$ | $-0.085 \pm 0.008$ |
| $b_3$ | $1.29 \pm 0.04$ | $1.24 \pm 0.04$ |
| $\beta$ | $5.3 \pm 0.4$ | $5.6 \pm 0.3$ |
| $c$ | $0.484 \pm 0.010$ | $0.272 \pm 0.019$ |
| $q$ | $92.8 \pm 0.6$ | $39.05 \pm 0.21$ |
| $\tau^{(D)}$, μs | $33.0 \pm 0.4$ | $37.5 \pm 0.6$ |
| $\tau^{(T)}$, μs | $1.90 \pm 0.09$ | $1.32 \pm 0.66$ |
| $a^{(T)}$ | $0.127 \pm 0.002$ | $0.084 \pm 0.017$ |

**Table 2.** Results of FIMDA and FCS experiments on two different samples: TAMRA and RRX.

| Parameter | Component 1 | Component 2 |
|:---:|:---:|:---:|
| $c$ | $0.161 \pm 0.005$ | $0.253 \pm 0.015$ |
| $q$ | $91.6 \pm 1.1$ | $37.3 \pm 0.9$ |
| $\tau^{(D)}$, µs | $32.4 \pm 0.5$ | $37.4 \pm 0.7$ |
| $\tau^{(T)}$, µs | $1.77 \pm 0.15$ | |
| $a^{(T)}$ | $0.117 \pm 0.005$ | |

**Table 3.** Results of FIMDA and FCS experiments on a mixture of two different dyes, TAMRA and RRX.

## Conclusions

Gathering the results of single species experiments FIMDA and FCS data can be simultaneously or globally fitted using a single set of fit parameters. Comparing results from single species experiments with those from the two species mixture, one can conclude that the combined method FIMDA and FCS according to the present invention is able to resolve several species and determine their concentrations, specific brightness and diffusion times from a single measurement.

## EXAMPLE 2: A Combination of TRFA and 2D-FIDA

Fluorescence steady-state anisotropy (FSSA) is a traditional method having been one of the most popular methods used in drug screening (Eggeling et al., DDT Vol. 8, No. 14, 632 - 641, 2003). FSSA follows the degree of a reaction by observing the according change in the polarization of the fluorescence emission of one of the reactants. Its closest partner among fluctuation methods is 2D-FIDA that has won popularity in drug screening since its introduction in 2000 (Kask et al., Biophys. J., 1703 - 1713, 2000). 2D-FIDA (polarization mode) distinguishes and quantifies different species of a sample from a fit to a two-dimensional photon count number distribution obtained simultaneously from two detectors monitoring different polarization of fluorescence emission. On the other side, fluorescence time-resolved anisotropy (TRFA) is a successor of FSSA. It applies the observation of excitation-to-detection delay times (following the excitation by a sequence of repetitive light pulses) to the polarization of the fluorescence emission and distinguishes different species of a sample by their fluorescence lifetime and rotational characteristics. The unique features of TRFA have been widely applied, in particular in drug screening (Eggeling et al., DDT Vol. 8, No. 14, 632 - 641, 2003). It is a property of 2D-FIDA to determine absolute concentrations from species with different fluorescence anisotropy characteristics, while TRFA is highly efficient in resolving species with different lifetime and rotational diffusion (anisotropy) characteristics. Thus, applying the method according to the present invention it shall be shown that one method helps to overcome interpretation difficulties of the other method.

## Theory of a combination of TRFA and 2D-FIDA

Neither the traditional theory of TRFA nor the theory of 2D-FIDA in the form it was originally introduced should be directly applied for their combination according to the present invention. There are several main reasons why modifications should be introduced. (1) The traditional theory of TRFA is developed for the case when the emitted fluorescence is collected from a small spatial angle and the two light beams separated by a polarization analyzer are pure polarization components of the originally emitted fluorescence. In fluorescence fluctuation experiments, however, a microscope objective of a high aperture number is of importance. When a polarization analyzer is applied to the fluorescence beam collected by a high aperture optics, the two separated beams are not pure polarization components of the fluorescence originally emitted anymore but mixing of both components has occurred. Therefore, the theory of TRFA should be modified to account for the impure character of the separated polarization components of fluorescence. (2) The two count rates per molecule (brightness) of a given species corresponding to the two detectors (which are original fit parameters of 2D-FIDA) are not used as fit parameters of the combined method according to the present invention; rather, they are parameters dependent on a number of parameters of the TRFA model. For example, if a model is used that assumes a single mono-exponential isotropic component and a few rotational components per each species, then the two count rates per molecule of 2D-FIDA are functions of a fluorescence lifetime and the aniplitudes of the rotational components and their relaxation times of TRFA. In a similar way, the fractional count rate from a species that is a typical parameter of TRFA is not necessarily an independent fit parameter of the combined method according to the present invention; rather, it is a product of two other parameters, a concentration (i.e. mean number of molecules) and a count rate per molecule specific to the given species.

A full theory of TRFA will not be presented here, because there are too many specific technical details; e.g. on how the excitation-to-detection delay time data, which is based on integer bin numbers, is related to theoretical distributions of the real delay time; on how the instrument response function (e.g. covering the extend of the exciting light pulse) is interpolated; and on how the period of excitation is accounted for. Combination of TRFA with 2D-FIDA according to the present invention brings no modifications into details of that kind, which have been described in detail before (Kask et al., in: Knayenhof et al.: Fluorescence Spectroscopy, Imaging and Probes, New Tools in Chemical, Physical and Life Sciences, 2002; Palo et al., Biophys. J., 83, 605 - 618, 2002). These technical details described in the articles by Kask and Palo are therefore hereby incorporated by reference. The presented theory is therefore limited to equations of the distribution of the excitation-to-detection delay times after a distinct delta-excitation at time zero. We start from a model where each species j is characterized by a mono-exponential decay of fluorescence with a characteristic lifetime $\tau_j^{(F)}$ and several characteristic rotational times $\tau_{ji}^{(R)}$ describing rotational relaxation of the fluorophore. In this case, the count rates monitored by the two detectors from a single species can be expressed as a function of the excitation-to-detection delay time t.

$$I_1(t) = \sum_j I_{1j}(t) + \lambda_1(t) \qquad I_{1j}(t) = \frac{c_j q_{1j}}{\tau_j^{(F)}} \exp\left(-\frac{t}{\tau_j^{(F)}}\right) \times \left[1 + \sum_i 2 b_{ji}^{(R)} \exp\left(-\frac{t}{\tau_{ji}^{(R)}}\right)\right]$$

$$I_2(t) = \sum_j I_{2j}(t) + \lambda_2(t) \qquad I_{2j}(t) = \eta_{21} \frac{c_j q_{2j}}{\tau_j^{(F)}} \exp\left(-\frac{t}{\tau_j^{(F)}}\right) \times \left[1 + \sum_i 2 \kappa_{21} b_{ji}^{(R)} \exp\left(-\frac{t}{\tau_{ji}^{(R)}}\right)\right].$$

$I_1(t)$ and $I_2(t)$ are count rates by the first (monitoring the "parallel" polarization component with respect to the polarization of the laser) and the second detector (monitoring the "perpendicular" polarization component with respect to the polarization of the laser), respectively. The product of the mean number of molecules $c_j$ and the mean count rate per molecule (brightness) $q_{kj}$ is a measure of the overall mean count rate $I_{kj}$ from a given species j on the detector k (k = 1, 2). $b_{ji}$ and $\tau_{ji}$ are the relative amplitudes and the rotational relaxation times of the $i$-th rotational component of species j, respectively. $\eta_{21}$ is the relative efficiency of the second detector as compared to that of the first detector; its ideal value is 1.0. $\kappa_{21}$ is the relative amplitude of each rotational component as seen by the second detector with respect to the first detector. Its ideal value (for pure polarization components of emission) is -0.5, but a large aperture number of the objective is responsible for a significant reduction of the absolute value of $\kappa_{21}$ close to -0.4 or even -0.3. The sum of amplitudes $\sum_i b_{ji}$ is expected to be 0.4 in the case of parallel dipole moments of absorption and emission, which is the maximal possible value. Nevertheless, the present fitting program does not introduce a formal limit of that kind. Last but not least, $\lambda_k(t)$ expresses background count-rates of each detector due to scattering, dark counts or after-pulsing, which all have different characteristic upon the delay time t (e.g. scattering only gives contributions during the time of excitation (under this assumption only at t = 0), while dark counts are randomly distributed over all possible times t).

The basic theory of 2D-FIDA has been described in detail before (Kask et al., Biophys. J. 78, 1703 - 1713, 2000). It involves the same empirical parameters $a_h$ (h = 1,2,3) describing the spatial brightness profile as already described in the FIMDA theory above, the mean number of molecules (concentration) $c_j$ and the mean count rate per molecule (brightness) $q_{kj}$ of each fluorescing species j on each detector k (k = 1, 2), and background count-rates $\lambda_k$ for each detector k. In order to combine 2D-FIDA and TRFA according to the present invention, common parameters (i.e. global parameters) are customized.

The global concentration parameter $c_j$ can be treated in the same way since it has exactly the same meaning (mean number of molecules in the detection volume). Thus, the brightness parameter $q_j$ in 2D-FIDA can be calculated as integrals of the above count-rates $I_{kj}(t)$ for each species j and detector k.

$$q_{1j} = \frac{1}{c_j} \int_0^\infty I_{1j}(t)dt,$$

$$q_{2j} = \frac{1}{c_j} \int_0^\infty I_{2j}(t)dt.$$

The spatial parameters $a_h$ are local parameters to 2D-FIDA, while the background count-rates $\lambda_k$ can in principle be customized if their dependency upon the delay time t, which is not present in 2D-FIDA, is taken into account in TRFA theory.

The theory section of TRFA + 2D-FIDA could be finished at this point. However, the above given approximation have been made for ideal detectors, which is not satisfactory. In addition to true photon pulses, as generated by an incident of a light photon on the detector, real detectors from time to time produce artifact pulses due to after-pulsing of the detector. Furthermore, some counts are missed due to the dead time of the detector. These two processes can usually be ignored when TRFA or 2D-FIDA are used separately. Typically, the proportion of added and lost counts is only a fraction of a percent and these effects are simply hidden by slightly modified values of fit parameters compared to the ideal detector. For example, in 2D-FIDA, the case of the after-pulsing probability of 0.3 percent is practically indistinguishable from the case of no after-pulsing but a 1.003 times higher count rate per molecule, since both models practically yield identical count number distributions. In TRFA, if used alone, after-pulses are generated many pulse periods after the corresponding incident excitation pulse. Since the excitation-to-detection delay time is measured for every new excitation pulse, the actually measured delay times of after-pulses are practically randomly distributed. Thus, just like constant background such as dark counts of the detectors, after-pulses produce a constant background in the delay time distribution. Thus, data from a single TRFA measurement can be fitted assuming no after-pulsing but slightly increased dark count rate. In the combination of TRFA and 2D-FIDA according to the present invention, after-pulsing should not that easily be ignored because both data cannot be fitted simultaneously using a single set of biased parameter values. Rather, in the context of the present invention, after-pulsing should be included into the model. In 2D-FIDA it produces a small shift from true to apparent molecular brightness while in TRFA it produces a shift from the true to the apparent dark count rates.

$$q_{kj}^{(FTRA)} = q_{kj}$$

$$q_{kj}^{(2D\text{-}FIDA)} = (1 + p_{ap,k})q_{kj}$$

$$\lambda_{dark,k}^{(FTRA)} = \lambda_{dark,k} + p_{ap,k}\left(\lambda_{dark,k} + \lambda_{scat,k} + \sum_j c_j q_{kj}\right)$$

$$\lambda_{background,k}^{(2D\text{-}FIDA)} = \lambda_{dark,k} + \lambda_{scat,k}$$

$p_{ap}$ denotes the mean number of secondary (after-) pulses per an incident (photon or dark) count, k the detector (k = 1,2), j the species, $\lambda_{dark}$, $\lambda_{scat}$ and $\lambda_{background}$ the dark, scattering and background count rates, respectively.

Detector dead time is another issue which should be treated by an adequate approach. Both in TRFA and 2D-FIDA, different theory versions can be applied for accounting for dead time effects. However, in case the two methods are combined according to the present invention, an arbitrary pair of the theories need not be a good choice. First of all, one should ensure that after dead time corrections, the overall mean count rate, as well as mean count rate from each species calculated from the theories of TRFA and 2D-FIDA -are equal. This is not automatically granted because most (if not all) traditional TRFA theories assume no molecular number fluctuations while these fluctuations are of importance in 2D-FIDA. A dead-time correction for 2D-FIDA has e.g. been reported in Kask et al. (in: Knayenhof et al: Fluorescence Spectroscopy, Imaging and Probes, New Tools in Chemical, Physical and Life Sciences, 2002) and Palo et al.(Biophys. J., 83, 605 - 618, 2002). An appropriate approach is to run experiments under conditions of a low count rate and apply no dead time corrections (as in the examples below); for sure this is better than combining theories that use different approximations for TRFA and 2D-FIDA.

### *Simulated demonstration experiments*

For some purposes, well designed simulated experiments may even suit better than real ones. For example, the performance of a new developed analysis and fitting algorithm can nicely be tested using simulated data, because there is a granted correspondence between the model and the data, i.e. true values of model parameters are directly under control and the results that are to be expected from analysis are really known without limitations due to e.g. experimental artifacts. The data simulation algorithm applied here includes random walk of individual molecules. It has been successfully applied in testing new developed analysis techniques such as 2D-FIDA (Kask et al., Biophys. J. 78, 1703 - 1713, 2000), FIMDA (Palo et al., Biophys. J., 79, 2000), as well as FIDA, FLA and FILDA (Palo et al., Biophys. J., 83, 605 - 618, 2002). It has been verified many times that statistical errors of estimated parameters determined from experiments and those determined from data simulations coincide well. Table 4 presents the results of TRFA and 2D-FIDA analysis of a series of data simulated for a two-species sample with realistic values of model parameters corresponding to a phosphatase assay PTP1B (Eggeling et al., Proc. SPIE, Vol. 4692, 101 - 109, 2003). The results of the analysis of a series of 100 simulated experiments using a time window of 40 µs and a data collection time of 5 s are presented in Table 4.

| Parameter | Value directly used in simulations ($c$ and $q$ corrected for diffusion) | Mean value and standard error of the estimate by 2D-FIDA | Mean value and standard error of the estimate by TRFA | Mean value and standard error of the estimate by 2D-FIDA + TRFA |
|---|---|---|---|---|
| $c_{bound}$ | 0.573 | $0.582 \pm 0.044$ | NA | $0.582 \pm 0.026$ |
| $c_{free}$ | 0.478 | $0.475 \pm 0.048$ | NA | $0.474 \pm 0.022$ |
| $q_{bound}$, kHz | 11.53 | $11.36 \pm 1.0$ | NA | $11.44 \pm 0.51$ |
| $q_{free}$, kHz | 30.12 | $30.30 \pm 1.0$ | NA | $30.30 \pm 0.62$ |
| $\tau_{bound}^{(F)}$, ns | 0.850 | NA | $0.853 \pm 0.039$ | $0.855 \pm 0.036$ |
| $\tau_{free}^{(F)}$, ns | 2.150 | NA | $2.155 \pm 0.029$ | $2.155 \pm 0.029$ |
| $\tau_{bound}^{(R)}$, ns | 2.760 | NA | $3.0 \pm 1.8$ | $2.73 \pm 0.58$ |
| $\tau_{free}^{(R)}$, ns | 0.490 | NA | $0.500 \pm 0.082$ | $0.495 \pm 0.041$ |

**Table 4.** Results of analysis of a series of 100 simulated data using 2D-FIDA, TRFA and their combination according to the present invention (assuming two species, unbound and bound labeled peptide, involved in the phosphatase PTP1B assay (Eggeling et al., Proc. SPIE, Vol. 4962, 101 – 109, 2003). Values of parameters used in simulations are presented in the record column. It has been assumed in the analysis that the sample comprises two species with unknown parameters.

The results presented in table 4 clearly show that the combination of 2D-FIDA and TRFA according to the present invention on one hand evaluates all possible parameters on its own, which are not accessible by the prior art approaches 2D-FIDA or TRFA alone. This is even performed with at least as good accuracy as the methods alone; the statistical accuracy is significantly raised in the case of six out of eight parameters. The feature that information or statistical accuracy cannot be lost but only gained by the combination of different methods has occurred in all examples that have been studied so far (e.g. FCS and FIMDA). The most important property of the combination of several methods applying global fitting is that a higher number of parameters compared to any of the methods if used alone can be determined (or checked against wrong assumptions) from a single experiment and analysis step.

## _EXAMPLE 3 - A combination of TRFA, 2D-FIDA and FILDA_

At first, using two different types of simulated tests, we demonstrate that this particular combination of methods brings along a significant reduction of statistical errors. Thereafter, using real experiments on a single species, we demonstrate that this combination of methods can indeed be realized.

*Data simulation strategies*

We have selected values of parameters of the sample that coincide with physical parameters determined for a real biochemical assay. Here, the prototype of our simulation studies has been the PTP1B assay as in Example 2. The particular prototype has a relatively high (2.5-fold) contrast in the specific brightness and fluorescence lifetime between the bound and unbound states of the fluorophore. For many other real assays the contrast is lower. In simulations it is simple to select any particular contrast value; we have indeed modified the contrast value to see where the limits of different methods are.

In a typical case when studying a biochemical assay, there are two fluorescent species involved. However, we have also simulated experiments with three different species, the third species modeling fluorescence by an unwanted impurity or the library compound (i.e. the screened drug candidate) itself. In order to be realistic again, we have studied fluorescence of a series of library compounds and selected a few "typical" sets of observed parameters. In data simulations, values of these parameters were assigned to the third species ("impurity").

*Results of simulated experiments*

*Test 1: Resolving two fluorescent species with unknown physical properties*

Using data simulations, we have studied how different fluorescence methods succeed with resolving two species. When studying samples with two different physical states of a fluorophore (to be specific, let us call them "bound" and "unbound"), the simplest test task would be to determine their concentrations when their specific physical properties are known beforehand. Here, we have selected a more complicated test: we assume no values of physical properties of the two states of the fluorophore are given beforehand. We only assume that the model used in the analysis is adequate.

However, for data simulations we need to specify all relevant parameters of the sample. In all simulated experiments reported here, the prototype assay has been PTP1B. The concentration equilibrium between the "bound" and "unbound" state of the fluorophore for normal samples (corresponding to negative control samples with no added compounds or a non-active compound added) has been set to 55:45. Values of parameters of the assay compounds that are relevant in data simulations are given in Table 5.

Table 5.

| Values of parameters used in data simulations for test 1. | | |
|---|---|---|
| **Parameter** | **"Bound" species** | **"Unbound" species** |
| Mean number of molecules per confocal volume | 0.275 | 0.225 |
| Count rate per molecule / kHz | 19.4 | 32.0 |
| Fluorescence lifetime / ns | 1.30 | 2.15 |
| Fluorescence anisotropy | 0.230 | 0.088 |

For demonstration purposes, we present results of analysis for simulated data for the case that the lifetime and brightness contrast between the "unbound" and "bound" state of the fluorophore was reduced from the original 2.53 to 1.65. Data acquisition time in the simulated experiments was 5 seconds. Each experiment has been repeated 64 times. In analysis, values of parameters of equipment were set to the values that were used in simulations.

On Fig. 6, mean fit values of a selected set of parameters together with their standard errors are graphed, for two individual methods and two combined methods. Naturally, TRFA and 2D-FIDA alone can estimate only a part of all presented parameters. It is surprising that even parameters that can be estimated only by TRFA or only by 2D-FIDA are significantly more accurately estimated by the combination of the two methods. When FILDA is added as the third method in the combination, statistical errors are further reduced as seen on the graph, roughly by a factor of two.

*Test 2: Resolving two known plus one unknown species*

Here we present an example when data were simulated for three fluorescent species, see table 6. Two of them were ordinary species of the PTP1B assay while the third species is an impurity. In analysis, specific parameters of the normal assay components were fixed to their true values (corrected for diffusion) while it was assumed that nothing of the impurity was known beforehand.

Table 6.

| Values of parameters used in data simulations for test 2. | | | |
|---|---|---|---|
| Parameter | "Bound" species | "Unbound" species | Impurity |
| Mean number of molecules per confocal volume | 0.55 | 0.45 | 1.90 |
| Count rate per molecule / kHz | 12.7 | 32.0 | 11.0 |
| Fluorescence lifetime / ns | 0.85 | 2.15 | 3.60 |
| Fluorescence anisotropy | 0.254 | 0.088 | 0.085 |

Standard errors of estimated by fitting parameters for different methods are graphed on Fig. 7. Here again, a set of parameters can be determined by TRFA and another set can be determined by 2D-FIDA while their combination according to the present invention determines parameters with a significantly improved accuracy compared to the individual methods alone. In this example, adding FILDA into the combination brings along a further reduction of some errors, but this reduction is modest compared to that of the previous example.

The advantage of applying the method according to the present invention to the impurity problem is also nicely shown in the scatter graphs of Fig. 8 a and b, where the count rate of bound species is plotted against the estimated count rate of impurity as estimated by the different methods. Each (individual or combined) method has its pattern of "scattering" of the results in the space of estimated parameters. The patterns differ not only in the extent of scattering of fit values of a given parameter (i.e. in its standard error value), but also in their most favored direction. It can happen, as for patterns presented on Fig. 8 a and b, that fit values of a pair of parameters are highly correlated for one method and highly anti-correlated for another method. In such a situation, a significant reduction of statistical errors from a global fit analysis according to the present invention can be achieved (Fig. 8).

We have studied similar examples but with different sets of impurity parameters. When fluorescence lifetime of the impurity occurs to be close to the lifetime of another species but their specific brightness differ, then errors of TRFA grow while 2D-FIDA is the dominant method of analysis. If, however, the specific brightness of the impurity occurs to be nearly equal to that of another species but the lifetimes differ, then the importance of TRFA dominates over that of the FIDA-based methods. For all examples studied, the combination of the three methods is the best method.

### Experiments

### Equipment

We have used a confocal fluorescence microscope that is a prototype of the Insight instrument (Evotec Technologies GmbH, Germany; Olympus, Japan). It is a single-pinhole confocal microscope with two avalanche photodiodes monitoring two polarization components of emission. Fluorescence is excited by a 80 MHz pulsed (FWHM about 250 ps) diode laser at the wavelength of 632 nm (PDL 800, PicoQuant GmbH, Germany). Emission is monitored through a dichroic mirror and an interference filter 670DF40; for both polarization components, transmission of the dichroic mirror is a flat function in the full range of wavelengths where the filter is transparent. Detection time of each photon is registered in terms of a macro-time with a resolution of a pulse period (12.5 ns), and a micro-time within each pulse period with a resolution of 1/95 of the pulse period (i.e., 0.132 ns). Data are saved in two raw data files (one for each detector) on the photon-by-photon basis. Different histograms are afterwards converted from raw data. The electronics of the measurements is a prototype of a SPU signal processing unit (Evotec Technologies GmbH).

### After-pulsing probabilities and background count rates

Some preliminary experiments were run in order to determine some parameters of the equipment that were fixed to these determined values in subsequent experiments. This involves (i) estimation of after-pulsing probability of the two detectors and (ii) estimation of the background (dark and scattered) count rates of the two detectors.

Experiments on pure water were used to estimate the dark and scattered count rates of the two detectors. The dark count rates were 0.26 and 0.43 kHz while the scattered count rates were 0.43 and 0.21 kHz, for the "parallel" and the "perpendicular" detection channels correspondingly. Values of these parameters depend (but only slightly, less than by 10 percent) on the method that is used for their estimation; in the first hand, on the issue whether a fluorescent impurity is involved in the model of the "pure" water, or not. (For the sake of simplicity, we have not involved the impurity, even though rare bursts in fluorescence intensity as well as a decay component with a lifetime of around 1.4 ns would justify its introduction.)

### *Spatial brightness parameters and factor-type parameters of the equipment*

Spatial brightness parameters are best determined from 2D-FIDA histograms. In principle, one could also use or involve FILDA histograms for that purpose, but this can hardly make things better because the additional information carried by FILDA histograms in respect to 2D-FIDA histograms concern only bin numbers that are in no way influenced by the shape of the spatial brightness function. Fit values of spatial parameters are slightly dependent on the dye studied, see Table 7.

Table 7.

| Parameters of the spatial brightness function determined by 2D-FIDA using different dye solutions | | |
|---|---|---|
| **Dye** | $\alpha_2$ | $\alpha_3$ |
| MR121 | $-0.511 \pm 0.013$ | $0.130 \pm 0.002$ |
| Cy5 | $-0.526 \pm 0.035$ | $0.140 \pm 0.004$ |
| Oxazine 170 | $-0.428 \pm 0.060$ | $0.113 \pm 0.008$ |

We best rely on the results obtained on MR121. MR121 is characterized by a mono-exponential fluorescence decay while both Cy5 and Oxazine 170 deviate from this behavior. Furthermore, Cy5 is known for an abnormal shape of the auto-correlation function of fluorescence intensity. In the summary, we have reasons to believe that MR121 is more homogeneous in its fluorescence characteristics which suits better for calibration experiments than the two other dyes.

Using TRFA experiments on the same dye (MR121), factor-type parameters of equipment were estimated as presented in Table 8. Values of these parameters determined from measurements of other samples are roughly similar to those determined from MR121, but sample-to-sample deviations are rather high. In the case of the other samples than MR121, we have assumed that both fluorescence decay and rotational relaxation have two exponential terms. With this model, for all samples studied, the mean square of weighted residuals ($\chi^2$) is between 1.09 and 1.25.

Table 8.

| Factor-type parameters determined by TRFA | | |
|---|---|---|
| **Meaning of the parameter** | **Mean estimated value and mean square measurement-to-measurement deviation using MR121** | **Mean estimated value and mean square sample-to- sample deviation using all samples** |
| Efficiency ratio of the detection channels, perpendicular to parallel | $1.003 \pm 0.002$ | $0.991 \pm 0.016$ |
| Initial amplitude of the rotational component for the detector monitoring parallel polarization (ideally 0.8) | $0.61 \pm 0.06$ | $0.79 \pm 0.09$ |
| Amplitude ratio of the rotational components, perpendicular to parallel (ideally -0.5) | $-0.40 \pm 0.05$ | $-0.28 \pm 0.14$ |

### *Global fit quality*

When parameters of the equipment were fixed to the pre-determined values, all three types of histograms of a given sample were globally fitted. Fit quality is reasonable for four out of six samples. The exceptions are Cy5 and the oligo labeled with Cy5 which have $\chi^2$ values of 1.82 and 2.8 and a visibly non-random pattern of residuals. MR121 is the best sample with $\chi^2 = 1.11$, while the other three samples have $\chi^2$ between 1.15 and 1.30. In Fig. 9, an example of residuals of fitting of all three types of histograms are presented, corresponding to a sample with an MR121-labeled oligo. It is shown that the combination of all methods can nicely be customized and applied to real experiments.

### *Advantage of combining different methods in a global analysis according to the present invention*

The question arises whether it is advantageous to combine a set of methods or to simply apply the same set subsequently, which in principle gathers the same information. The key points for an answer are the understanding of the essence of the global fitting strategy in general and in particular of the mechanism of how improvements are gained from combining different fluorescence methods of analysis.

Starting from a single model with a given set of parameters consistent for all methods and assuming that the outcome of fitting by each individual method is a likelihood function in the space of all parameters of the model, the global fitting produces a likelihood function that is under normal conditions (when assuming independent data by different methods) a straightforward product of the likelihood functions obtained by the individual methods. Thus, under the given assumptions, global fitting is equivalent to consecutive application of individual methods. However, neither of the assumptions made are usually met. In an original form, two methods worth combining need not have any directly overlapping parameters at all. 2D-FIDA and TRFA is an example of that pair. The original parameters of 2D-FIDA are spatial parameters $\alpha_h$ (h = 1,2,3), background count rates $\lambda_{background,k}$, concentrations $c_j$ and molecular count rates $q_{kj}$, while those of TRFA are the factor $\eta_{21}$, dark count rates $\lambda_{dark,k}$, fractional count rates from species $l_{kj}$, fluorescence lifetimes $\tau_j^{(F)}$, amplitudes and rotational relaxation times $b_{ji}^{(R)}$ and $\tau_{ji}^{(R)}$ (the index k = 1,2 denotes the detector number, j the species, and i the rotational components of each species). Furthermore, the result of analysis that is usually returned by a fitting program is not a likelihood function (or some other maximized or minimized function). It results in parameter values and their standard deviation at the maximum of the likelihood function. The user has usually no idea of long narrow folds (or valleys) of the maximized (or minimized) function characteristic to the likelihood function (or any other function used in fitting) in a multi-dimensional space of model parameters. Global fitting is the convenient tool for finding out the maximum of the overall likelihood function of all parameters of the model.

### Claims

1. A method for resolving species of fluorescent molecules in a sample using a set of sample parameters ($\alpha$, $\beta$, ...), each parameter representing a physical property of a species, comprising the steps of:

   - monitoring fluorescence signals emitted by fluorescent molecules in said sample,
   - determining from said signals at least two different experimental statistical functions $\hat{F}_1$ **(u),** $\hat{F}_2$ **(v)**,..., with arguments **u** and **v**,
   - globally fitting corresponding theoretical statistical functions $F_1$ **(u)**, $F_2$ **(v)**,... against said experimental statistical functions $\hat{F}_1$ **(u)**, $\hat{F}_2$ **(v)**,..., thereby estimating sample parameters of interest

     wherein

   - at least two functions out of said experimental statistical functions $\hat{F}_1$ **(u)**, $\hat{F}_2$ **(v)** ,... differ in at least one of their arguments.

2. The method according to claim 1 wherein each said theoretical statistical function $F_1$ **(u)**, $F_2$ **(v)**,... depends on said set of sample parameters ($\alpha$, $\beta$, ...) or on a subset thereof, in the latter case with the provision that at least two functions out of said theoretical statistical functions $F_1$ **(u)**, $F_2$ **(v)**,... depend on at least one shared sample parameter other than concentration.

3. The method of claim 1 and/or 2 wherein at least one of said experimental statistical functions $\hat{F}_1$ **(u)**, $\hat{F}_2$ **(v)**, ... is sensitive to intensity fluctuations of the monitored fluorescence.

4. The method of at least one of claims 1 to 3 wherein at least one of said experimental statistical functions, $\hat{F}_1$ **(u)**, $F_2$ **(v)**, ... is a histogram.

5. The method according to at least one of claims 1 to 4 wherein at least one of said experimental statistical functions $F_1$ **(u)**, $F_2$ **(v)** , ... is a correlation function.

6. The method according to at least one of claims 1 to 5 wherein said sample parameters ($\alpha,\beta,...$) are chosen from the group consisting of concentration, molecular brightness, fluorescence lifetime, diffusion coefficient, rotational relaxation time, and measures of any of the foregoing.

7. The method according to at least one of claims 1 to 6 wherein said arguments **u, v,**..., are chosen from the group consisting of photon count number per time interval, time interval between photon counts, time interval between excitation of fluorescence emission and a photon detection, measures of any of the foregoing, and a sum of integer bin numbers, each bin number representing a time interval between excitation of fluorescence emission and a photon detection.

8. The method according to at least one of claims 1 to 7 for use in drug screening, in particular for evaluating chemical equilibrium between two or more assay components in cases when the potential drug compound which is screened is auto-fluorescent or contains a fluorescent impurity, or is a fluorescence quencher that modifies fluorescence properties of the assay components.

Fig. 1a

Fig. 1b

T = 40 µs

Fig. 1c

T = 200 µs

Fig. 1d

T =1000 µs

Fig. 1e

T = 4000 μs

Fig. 2

(Fig. 3)

(Fig. 4)

(Fig. 5)

(Fig. 6)

(Fig. 7)

(Fig. 8)

(Fig. 9)

**European Patent Office**

**EUROPEAN SEARCH REPORT**

Application Number

EP 03 02 4655

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MULLER J D ET AL: "Resolving heterogeneity on the single molecular level with the photon-counting histogram" BIOPHYSICAL JOURNAL, JAN. 2000, BIOPHYS. SOC, USA, vol. 78, no. 1, pt.1, pages 474-486, XP002270081 ISSN: 0006-3495 * page 479, column 1 - page 481, column 2; figures 3,5 * * page 484 - page 485 * | 1-8 | G01J3/44 G01N21/64 |
| A | WO 01 59416 A (EVOTEC BIOSYSTEMS AG ;KASK PEET (EE)) 16 August 2001 (2001-08-16) * page 2-3; figures 5-7 * | 1-8 | |
| A | PALO K ET AL: "FLUORESCENCE INTENSITY MULTIPLE DISTRIBUTIONS ANALYSIS: CONCURRENT DETERMINATION OF DIFFUSION TIMES AND MOLECULAR BRIGHTNESS" BIOPHYSICAL JOURNAL, NEW YORK, US, US, vol. 79, no. 6, December 2000 (2000-12), pages 2858-2866, XP001005981 ISSN: 0006-3495 * page 2861 - page 2865 * | 1-8 | |
| A | EP 0 884 583 A (EVOTEC BIOSYSTEMS GMBH) 16 December 1998 (1998-12-16) * page 4, line 1-5; claims 3,4; figure 3 * | 1-8 | |
| A | CHEN Y ET AL: "THE PHOTON COUNTING HISTROGRAM IN FLUORESCENCE FLUCTUATION SPECTROSCOPY" BIOPHYSICAL JOURNAL, NEW YORK, US, US, vol. 77, no. 1, July 1999 (1999-07), pages 553-567, XP001005983 ISSN: 0006-3495 * page 565, column 1 * | 1-8 | |

TECHNICAL FIELDS SEARCHED (Int.Cl.7)

G01J
G01N

-/--

The present search report has been drawn up for all claims

| Place of search | Date of completion of the search | Examiner |
|---|---|---|
| MUNICH | 12 February 2004 | Mason, W |

EPO FORM 1503 03.82 (P04C01)

**European Patent Office**

**EUROPEAN SEARCH REPORT**

Application Number

EP 03 02 4655

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2002/063863 A1 (KASK PEET) 30 May 2002 (2002-05-30) * page 7-8 * --- | 1-8 | |
| A | PALO K ET AL: "Fluorescence intensity and lifetime distribution analysis: toward higher accuracy in fluorescence fluctuation spectroscopy" BIOPHYSICAL JOURNAL, AUG. 2002, BIOPHYS. SOC, USA, vol. 83, no. 2, pages 605-618, XP002270082 ISSN: 0006-3495 * page 607 - page 614 * ----- | 1-8 | |

TECHNICAL FIELDS SEARCHED (Int.Cl.7)

The present search report has been drawn up for all claims

| Place of search | Date of completion of the search | Examiner |
|---|---|---|
| MUNICH | 12 February 2004 | Mason, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 02 4655

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2004

| Patent document cited in search report | | Publication date | Patent family member(s) | | Publication date |
|---|---|---|---|---|---|
| WO 0159416 | A | 16-08-2001 | AU | 3172301 A | 20-08-2001 |
| | | | WO | 0159416 A1 | 16-08-2001 |
| | | | EP | 1254353 A1 | 06-11-2002 |
| | | | AT | 235045 T | 15-04-2003 |
| | | | AU | 4559600 A | 17-11-2000 |
| | | | DE | 60001731 D1 | 24-04-2003 |
| | | | DE | 60001731 T2 | 05-02-2004 |
| | | | DK | 1175602 T3 | 26-05-2003 |
| | | | WO | 0066985 A1 | 09-11-2000 |
| | | | EP | 1175602 A1 | 30-01-2002 |
| | | | JP | 2002543414 T | 17-12-2002 |
| | | | US | 2002008211 A1 | 24-01-2002 |
| EP 0884583 | A | 16-12-1998 | EP | 0884583 A1 | 16-12-1998 |
| | | | AT | 215694 T | 15-04-2002 |
| | | | DE | 69804612 D1 | 08-05-2002 |
| | | | DE | 69804612 T2 | 21-11-2002 |
| | | | DK | 988525 T3 | 29-07-2002 |
| | | | WO | 9857150 A1 | 17-12-1998 |
| | | | EP | 0988525 A1 | 29-03-2000 |
| | | | ES | 2173600 T3 | 16-10-2002 |
| | | | JP | 2002505742 T | 19-02-2002 |
| | | | US | 6515289 B1 | 04-02-2003 |
| US 2002063863 | A1 | 30-05-2002 | AU | 3925801 A | 20-08-2001 |
| | | | WO | 0159436 A2 | 16-08-2001 |
| | | | EP | 1254362 A2 | 06-11-2002 |
| | | | JP | 2003522946 T | 29-07-2003 |

EPO FORM P0459

For more details about this annex : see Official Journal of the European Patent Office, No. 12/82